Europäisches Patentamt

European Patent Office

Office européen des brevets

(19)

(11) Numéro de publication : **0 159 075**
**B1**

(12) **FASCICULE DE BREVET EUROPÉEN**

(45) Date de publication du fascicule du brevet :
02.03.88

(51) Int. Cl.⁴ : **G 11 B 23/087**

(21) Numéro de dépôt : **85200460.5**

(22) Date de dépôt : **26.03.85**

(54) **Cassette pour bande vidéo.**

(30) Priorité : **10.04.84 FR 8405639**

(43) Date de publication de la demande :
**23.10.85 Bulletin 85/43**

(45) Mention de la délivrance du brevet :
**02.03.88 Bulletin 88/09**

(84) Etats contractants désignés :
**BE CH DE GB LI NL**

(56) Documents cités :
**EP-A- 0 097 964**
**FR-A- 2 104 074**
**FR-A- 2 136 612**
**FR-A- 2 194 017**
**FR-A- 2 216 643**
**FR-A- 2 390 801**

(73) Titulaire : **GEFITEC S.A.**
**Avenue de la Gare, 5 Case postale 452**
**CH-1001 Lausanne 1 (CH)**

(72) Inventeur : **Posso, Patrick Pierre Philippe**
**Avenue de la Gare 5**
**CH-1001 Lausanne (CH)**

(74) Mandataire : **Meylan, Robert Maurice et al**
**c/o BUGNION S.A. 10, route de Florissant Case**
**Postale 375**
**CH-1211 Genève 12 - Champel (CH)**

Jouve, 18, rue St-Denis, 75001 Paris, France

## Description

La présente invention concerne une cassette pour bande vidéo destinée à recevoir deux bobines supportant une bande magnétisable transférable d'une bobine à l'autre, comprenant un boîtier constitué d'une partie inférieure en forme de bac et d'un couvercle fixé sur la partie inférieure qui présente une face frontale plane munie d'une ouverture formant une zone d'accès à la bande pour son enregistrement ou sa lecture et fermée par un volet articulé sur l'une des parties du boîtier et soumis à l'action d'un moyen élastique qui a tendance à le maintenir fermé, et des moyens de verrouillage du volet en position fermée comprenant un verrou constitué par une bascule logée entre ladite paroi frontale du boîtier et une paroi auxiliaire intérieure et maintenue entre la partie inférieure du boîtier et le couvercle, cette bascule étant venue d'une pièce en matière synthétique avec un bras élastique rectiligne prenant appui sur une partie du boîtier et ayant tendance à maintenir le verrou engagé avec une partie d'accrochage du volet, la face frontale présentant en outre un orifice en face du verrou pour l'introduction du doigt de déverrouillage automatique d'un appareil de lecture ou d'enregistrement, ladite bascule basculant sous l'action du doigt de déverrouillage.

Une cassette de ce type est connue du document EP-A-0 097 964. Dans cette cassette la bascule est munie d'un axe venant s'engager dans des encoches prévues dans les parois du boîtier, ce qui rend difficile une mise en place automatique de la bascule, la difficulté étant encore augmentée en raison du fait que le bras élastique travaille dans une direction transversale à la direction d'introduction de la bascule dans son logement. Pour la même raison un préarmage du bras élastique est difficile à réaliser. En outre, lorsque les bascules sont mises en vrac dans une trémie, elles risquent de s'accrocher les unes aux autres par leurs axes.

On connaît également du document FR-A-2 194 017 une cassette comportant un mécanisme de verrouillage du couvercle comprenant un levier muni d'un axe et soumis à l'action d'un ressort tendu entre l'une de ses extrémités et un point d'ancrage. Une mise en place automatique de ce levier et de son ressort est pratiquement impossible.

La présente invention a pour but de réaliser un verrou susceptible d'être facilement mis en place dans une machine automatique, sans risque d'accrochage avec d'autres verrous avant montage, lorsqu'il est dans un bac ou une trémie, et de telle sorte que son bras élastique soit automatiquement légèrement armé.

A cet effet, la cassette selon l'invention est caractérisée en ce que la bascule est constituée d'une barrette rectiligne maintenue, en sa partie médiane, entre un bossage en forme de nervure, solidaire de la partie inférieure du boîtier lui servant de point de pivotement autour d'un axe perpendiculaire à ladite face frontale, et un bossage solidaire du couvercle appuyant sur la bascule en fléchissant le bras élastique qui prend appui sur la partie inférieure du boîtier en maintenant élastiquement la bascule en position de verrouillage, l'espace entre les deux bossages étant tel qu'il permet à la bascule de basculer sur le bossage inférieur lorsqu'elle est actionnée par ledit doigt de déverrouillage, ladite barrette présentant en son milieu une encoche en V dont le fond est arrondi selon un arc de cercle correspondant à l'extrémité arrondie du bossage inférieur.

Le verrou ne comporte ni boucle ni axe de telle sorte que les verrous en vrac ne risquent pas de s'accrocher les uns aux autres. Pour la mise en place du verrou il suffit de laisser tomber celui-ci dans son logement, entre la paroi frontale et la paroi auxiliaire intérieure et sur le bossage de la partie inférieure, puis de fixer le couvercle du boîtier, le bossage solidaire de ce couvercle venant automatiquement terminer la mise en place du verrou et armer son bras élastique. Une telle mise en place peut se faire facilement sur une machine automatique.

L'encoche en V est de préférence fermée latéralement par une paroi s'étendant au-delà de la barrette, entre le bossage inférieur et ladite paroi auxiliaire intérieure du boîtier pour le guidage de la bascule, et ledit bras élastique part du centre de la bascule en formant un angle d'environ 20 à 30°.

Une forme d'exécution de la cassette selon l'invention sera décrite à titre d'exemple au moyen du dessin annexé.

La figure 1 est une vue frontale partielle de la cassette.

La figure 2 est une vue partielle en coupe selon II-II de la figure 1.

La figure 3 est une vue partielle en coupe selon III-III de la figure 1.

La figure 4 est une vue partielle frontale en coupe selon IV-IV de la figure 2, avant la fixation du couvercle.

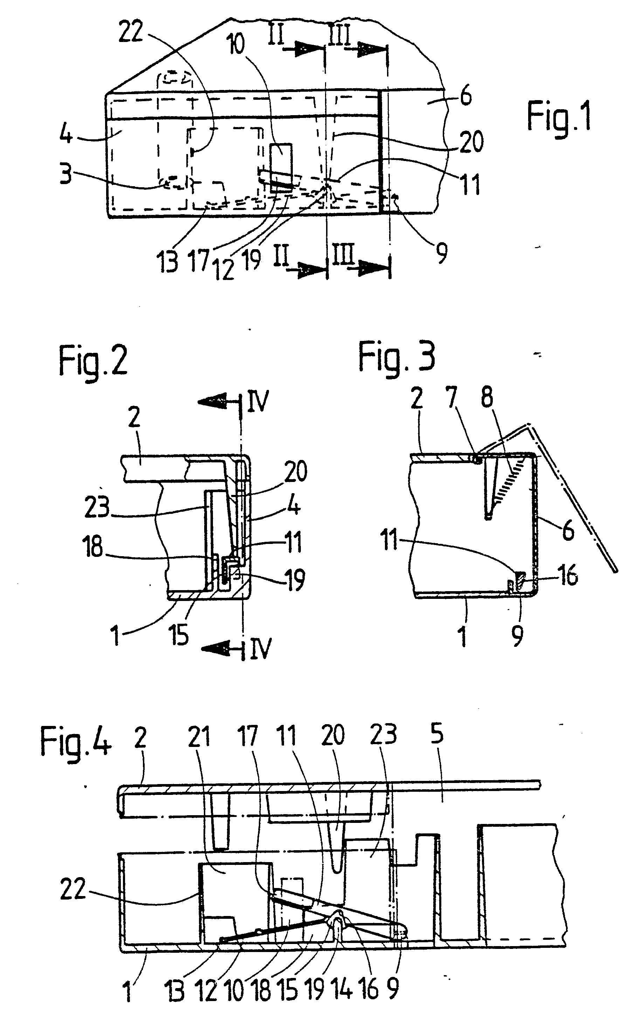

La cassette représentée se présente sous la forme connue d'une boîte rectangulaire constituée d'une partie inférieure 1 en forme de bac et d'un couvercle 2 emboîté sur la partie inférieure 1 et fixé à cette partie inférieure au moyen de quelques vis 3. Cette cassette présente une face frontale 4 interrompue sur sa plus grande partie de manière à présenter une ouverture 5 formant une zone d'accès à la bande magnétique portée par deux bobines que la cassette est destinée à contenir. Cette zone d'accès 5 est normalement fermée par un volet 6 articulé sur le couvercle 2 au moyen d'une charnière horizontale 7 (figure 3) et soumis à l'action d'un ressort de traction 8 qui a tendance à le maintenir fermé de telle sorte qu'il est situé dans le plan de la face frontale 4. Ce volet 6 est de forme connue et correspond par exemple à l'art antérieur tel qu'il est illustré dans le brevet US-4.323.207. Il est muni à sa base d'une partie coudée en U 9 constituant la partie d'accrochage coopérant avec le verrou pour constituer les moyens de verrouillage du volet 6. La face frontale 4 présente en outre une fenêtre 10 par laquelle peut pénétrer le doigt de déverrouillage de l'appareil d'enregistrement-lecture.

Le verrou est constitué par une bascule rectiligne 11 (figure 4) en polypropylène venue d'une pièce avec un bras élastique 12 rectiligne lorsqu'il est libre de toute contrainte, partant du milieu de la bascule 11 en formant avec celle-ci un angle d'environ 25°. L'extrémité du bras élastique 12 se termine par un point d'injection 13 qui est utilisé comme point d'appui et de glissement sur le fond de la cassette. La bascule présente en son milieu une encoche en forme de V 14 au fond arrondi en arc de cercle, cette encoche 14 étant fermée d'un côté par une paroi 15 parallèle à l'encoche et s'étendant en dessous de la bascule. L'un des bras de la bascule 11 présente une surface oblique 16 coopérant avec le crochet 9 du volet pour le verrouillage automatique du volet, tandis que l'autre bras présente une surface oblique 17 destinée à coopérer avec le plan oblique du doigt de déverrouillage de l'appareil d'enregistrement-lecture. La bascule 11 est montée dans un logement formé d'un côté par la paroi frontale 4 et de l'autre côté par une paroi auxiliaire intérieure 18 solidaire de la partie 1. Cette partie 1 présente en outre un bossage 19 en forme de nervure dont l'extrémité arrondie est engagée dans l'encoche en V 14 de la bascule. La bascule 11 est maintenue dans cette position engagée sur le bossage 19 par un bossage 20 solidaire du couvercle 2 dont l'extrémité est également arrondie pour permettre un basculement par roulement de la bascule 11 sur ce bossage 20. La partie inférieure 1 présente en outre une paroi auxiliaire intérieure 21 parallèle à la face frontale 4 et reliée à celle-ci par une paroi perpendiculaire 22, et une paroi intérieure 23, également parallèle à la face frontale 4, solidaire de la paroi 18 légèrement en retrait de cette dernière, ces parois complétant le logement du verrou.

Pour mettre en place le verrou, il suffit de l'introduire tout d'abord librement dans son logement dans la partie inférieure 1 en faisant attention que l'extrémité 13 de son bras élastique 12 soit près de la paroi 22. La bascule 11 vient alors glisser par sa partie droite sur le bossage 19 de telle sorte que l'encoche 14 de la bascule vient s'engager automatiquement sur le bossage 19. Il suffit ensuite de fixer le couvercle, le bossage 20 de celui-ci venant presser sur la bascule 11 en finissant de l'engager sur le bossage 19 et en armant légèrement le bras élastique 12 qui remplit la fonction d'un ressort de rappel. Le verrou est maintenu en place latéralement par sa paroi 15 engagée entre le bossage inférieur 19 et la paroi auxiliaire 18 du boîtier (figure 2).

Le fonctionnement du verrou est évident. Lors du déverrouillage le doigt de déverrouillage de l'appareil pénètre à travers la fenêtre 10 en exerçant sur la partie 17 de la bascule une force dirigée vers le bas. La bascule pivote alors sur le bossage 19 en libérant le crochet 9 du volet 6. Lors du verrouillage le crochet 9 du volet vient soulever la bascule 11 par sa face oblique 16 et la bascule 11 pivote sur le bossage 20 en fléchissant le bras élastique 12.

Des variantes sont possibles. En particulier, la bascule pourrait être non rectiligne et son bras élastique pourrait présenter une légère courbure. Elle pourrait être exécutée en tout autre matériau adéquat. Quant aux bossages 19 et 20 ils pourraient avoir toute autre forme adaptée à leur fonction et à la configuration de la bascule.

## Revendications

1. Cassette pour bande vidéo destinée à recevoir deux bobines supportant une bande magnétisable transférable d'une bobine à l'autre, comprenant un boîtier constitué d'une partie inférieure en forme de bac (1) et d'un couvercle (2) fixé sur la partie inférieure qui présente une face frontale plane (4) munie d'une ouverture (5) formant une zone d'accès à la bande pour son enregistrement ou sa lecture et fermée par un volet (6) articulé sur l'une des parties du boîtier et soumis à l'action d'un moyen (8) élastique qui a tendance à le maintenir fermé, et des moyens de verrouillage du volet en position fermée comprenant un verrou constitué par une bascule (11) logée entre ladite paroi frontale du boîtier et une paroi auxiliaire intérieure (18) et maintenue entre la partie inférieure du boîtier et le couvercle, cette bascule étant venue d'une pièce en matière synthétique avec un bras élastique rectiligne (12) prenant appui sur une partie du boîtier et ayant tendance à maintenir le verrou engagé avec une partie d'accrochage (9) du volet, la face frontale (4) présentant en outre un orifice (10) en face du verrou pour l'introduction du doigt de déverrouillage automatique d'un appareil de lecture ou d'enregistrement, ladite bascule basculant sous l'action du doigt de déverrouillage, caractérisée en ce que la bascule (11) est constituée d'une barrette rectiligne maintenue, en sa partie médiane, entre un bossage (19) en forme de nervure, solidaire de la partie inférieure du boîtier et lui servant de point de pivotement autour d'un axe perpendiculaire à ladite face frontale, et un bossage (20) solidaire du couvercle appuyant sur la bascule en fléchissant le bras élastique (12) qui prend appui sur la partie inférieure du boîtier en maintenant élastiquement la bascule en position de verrouillage, l'espace entre les deux bossages étant tel qu'il permet à la bascule de basculer sur le bossage inférieur lorsqu'elle est actionnée par ledit doigt de déverrouillage, ladite barrette présentant en son milieu une encoche en V (14) dont le fond est arrondi selon un arc de cercle correspondant à l'extrémité arrondie du bossage inférieur (19).

2. Cassette selon la revendication 1, caractérisée en ce que ladite encoche en V (14) est fermée latéralement par une paroi (15) s'étendant au-delà de la barrette, entre le bossage inférieur (19) et la paroi auxiliaire intérieure (18) du boîtier pour le guidage de la bascule.

3. Cassette selon la revendication 1 ou 2, caractérisée en ce que ledit bras élastique (12) s'étend du centre de la bascule en formant un angle d'environ 20 à 30°.


## Claims

1. A video tape cassette adapted to receive a pair of spools supporting a magnetizable tape transferable from one spool to the other spool, which comprises a housing consisting of a lower, box-shaped portion (1) and of a cover (2) secured to said lower portion and having a flat front surface (4) in which an aperture (5) is formed to constitute an access area to the tape for recording or reading the tape, and closed by a flap (6) hingedly mounted to one portion of said housing and responsive to resilient means (8) constantly urging said flap to its closed position, and means for locking said flap in its closed position, said flap locking means comprising a lock consisting of a lever (11) disposed between said front surface of said housing and an inner auxiliary wall (18) formed integrally as a molded part of synthetic material with a straight resilient arm (12) bearing against one portion of said housing and urging said lock for engagement with a hooking portion (9) of said flap, said front surface (4) further comprising an orifice (10) registering with said bolt for inserting the automatic release stud of a recording/reading apparatus, said lever tilting under the action of the release stud, characterized in that said lever (11) consists of a rectilinear rod held intermediate its ends between a rib-shaped boss (19) formed integrally with said lower portion of the housing and acting as a fulcrum point for pivoting about an axis perpendicular to said front surface and another boss (20) formed integrally with said cover and bearing on said rocking lever so as to bend the resilient arm (12) thereof which bears against the lower portion of the housing while resiliently keeping said lever in its locked position, the gap between said bosses being such that said lever can tilt on the lower boss when said lever is actuated by said release stud, said rod being formed intermediate its ends with a V-shaped notch (14) of which the bottom is rounded to a circular arc configuration corresponding to the rounded end of the lower rib-shaped boss (19).

2. A video cassette according to claim 1, characterized in that said V-shaped notch (14) is closed laterally by a wall (15) extending beyond said rod, between said lower boss (19) and said inner auxiliary wall (18) of said housing for guiding said lever.

3. A video cassette according to claim 1 or 2, characterized in that said resilient arm (12) extends from the center of said lever so as to form an angle of about 20 to 30° therewith.

## Patentansprüche

1. Videobandkassette zur Aufnahme zweier Spulen mit einem magnetisierbaren Band, welches von einer Spule auf die andere umspulbar ist, bestehend aus einem Gehäuse aus einem Unterteil in Wannenform (1) und einem Deckel (2), welcher an dem Unterteil befestigt ist, der eine ebene Vorderseite (4) mit einer Oeffnung (5) aufweist, die einen Zugangsbereich zu dem Band zum Aufnehmen und Ablesen bildet und die von einer Klappe (6) verschlossen ist, welche an einem der Gehäuseteile angelenkt ist und unter der Wirkung einer elastischen Kraft (8) steht, die sie geschlossen zu halten sucht, sowie mit einer Einrichtung zur Verriegelung der Klappe in geschlossener Stellung, bestehend aus einem Riegel in Form einer Wippe (11) zwischen dieser Vorderwand des Gehäuses und einer inneren Zwischenwand (18), wo sie zwischen dem Unterteil des Gehäuses und dem Deckel gehalten wird und wobei diese Wippe einstückig aus Kunststoff mit einem elastischen, geraden Arm (12) ausgebildet ist, welcher sich auf einem Teil des Gehäuses abstützt und den Riegel in Eingriff mit einem Verhakungsteil (9) der Klappe zu halten sucht, und wobei die Vorderseite (4) ferner eine Oeffnung (10) gegenüber dem Riegel aufweist zum Einführen des Fingers einer automatischen Entriegelung an einem Ablese- oder Aufnahmegerät, wobei diese Wippe unter dem Druck des Verriegelungsfingers verschwenkt, dadurch gekennzeichnet, dass die Wippe (11) aus einem geradlinigen Stab besteht, welcher an seinem Mittelteil zwischen einer Wulst (19) in Rippenform, die fest am Unterteil des Gehäuses angeordnet ist und ihm als Schwenkpunkt um eine Achse rechtwinklig zu dieser Vorderseite dient, und einer festen Wulst (20) am Deckel gehalten wird, welche auf die Wippe unter Verbiegung des elastischen Armes (12) drückt, der sich auf dem Unterteil des Gehäuses abstützt und die Wippe elastisch in der Verriegelungsstellung hält, wobei der Zwischenraum zwischen den Wülsten so ist, dass er der Wippe ein Schwenken auf der unteren Wulst ermöglicht, sobald sie von diesem Entriegelungsfinger betätigt wird, wobei dieser Stab an seiner Mitte eine Kerbe in V-Form (14) aufweist, deren Boden in einem Kreisbogen entsprechend dem abgerundeten Ende der unteren Wulst (19) abgerundet ist.

2. Kassette nach Anspruch 1, dadurch gekennzeichnet, dass die Kerbe in V-Form (14) seitlich von einer Wand (15) verschlossen ist, die sich bis über den Stab hinaus zwischen die untere Wulst (19) und die innere Zwischenwand (18) des Gehäuses zur Führung der Wippe erstreckt.

3. Kassette nach Anspruch 1 oder 2, dadurch gekennzeichnet, dass der elastische Arm (12) sich von der Mitte der Wippe aus erstreckt und einen Winkel von ungefähr 20 bis 30° bildet.

Fig.1

Fig.2

Fig. 3

Fig.4